(19) Europäisches Patentamt European Patent Office Office européen des brevets

(11) **EP 4 541 676 B1**

(12) **EUROPÄISCHE PATENTSCHRIFT**

(45) Veröffentlichungstag und Bekanntmachung des Hinweises auf die Patenterteilung:
**03.06.2026 Patentblatt 2026/23**

(21) Anmeldenummer: **24202288.7**

(22) Anmeldetag: **24.09.2024**

(51) Internationale Patentklassifikation (IPC):
**B60W 30/02** *(2012.01)*

(52) Gemeinsame Patentklassifikation (CPC):
**B60W 30/02; B60W 10/04; B60W 30/18027; B60W 40/114;** B60W 30/18172; B60W 2050/0033; B60W 2520/10; B60W 2520/125; B60W 2520/14; B60W 2520/20; B60W 2520/28; B60W 2710/0666; B60W 2710/083; B60W 2720/125; B60W 2720/14;
(Forts.)

(54) **VERFAHREN ZUR STABILISIERUNG EINES FAHRZEUGS BEI EINER ANFAHRSITUATION AUS DEM STILLSTAND UND VORRICHTUNG**

METHOD FOR STABILIZING A VEHICLE WHEN THE VEHICLE IS DRVING OFF FROM STANDSTILL AND DEVICE

PROCÉDÉ DE STABILISATION D'UN VÉHICULE LORS D'UNE SITUATION DE DÉMARRAGE À PARTIR DE L'ARRÊT ET DISPOSITIF

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **20.10.2023 DE 102023128836**

(43) Veröffentlichungstag der Anmeldung:
**23.04.2025 Patentblatt 2025/17**

(73) Patentinhaber: **KNORR-BREMSE Systeme für Nutzfahrzeuge GmbH 80809 München (DE)**

(72) Erfinder: **JUNDT, Oliver 74394 Hessigheim (DE)**

(56) Entgegenhaltungen:
**EP-B1- 1 993 867       US-A1- 2010 161 188 US-A1- 2020 122 534**

(52) Gemeinsame Patentklassifikation (CPC): (Forts.)
B60W 2720/20; B60W 2720/26

**Beschreibung**

Die Erfindung betrifft ein Verfahren zur Stabilisierung eines Fahrzeugs bei einer Anfahrsituation aus dem Stillstand, wobei das Fahrzeug von einer Antriebsmaschine angetrieben wird, welche bei dem Anfahrvorgang an angetriebenen Rädern ein Antriebsmoment erzeugt, gemäß Anspruch 1. Weiterhin betrifft die Erfindung auch eine Vorrichtung zur Ausführung des Verfahrens nach Anspruch 14.

Drehen die angetriebenen Räder eines Fahrzeugs bei einer Anfahrsituation aus dem Stillstand durch, so kann durch den Antriebsschlupf keine oder zu wenig Längskraft zwischen angetriebenen Rädern und Fahrbahn übertragen werden, um das Fahrzeug wie gewünscht zu beschleunigen, und/oder keine oder zu wenig Querkraft zwischen angetriebenen Rädern und Fahrbahn übertragen werden. Vor allem bei einer Seitenneigung und/oder bei einem niedrigem Reibwert der Fahrbahn kann dies dazu führen, dass das Fahrzeug seitlich wegrutscht.

Bei bekannten Antriebsschlupfregelungen (ASR) kann ein Durchdrehen von angetriebenen Rädern unter unzulässig hohem Schlupf erkannt werden, woraufhin das Antriebsmoment an den unzulässig hoch schlupfenden angetriebenen Rädern reduziert wird und/oder die unzulässig hoch schlupfenden angetriebenen Räder gezielt eingebremst werden. Dabei muss die Antriebsschlupfregelung (ASR) einen Kompromiss zwischen zügigem Losfahren (höheren Schlupf zulassen) und Fahrstabilität (niedrigeren Schlupf zulassen) eingehen. Es gibt aber Situationen, in denen dieser Kompromiss dazu führen kann, dass das Fahrzeug querdynamisch instabil wird und zur Seite wegrutscht.

Heutige ESP Systeme (welche auch in ein Bremssystem integriert sein können) werden in so einer Situation nicht eingreifen da bei den sehr geringen, bei einer Anfahrsituation herrschenden Geschwindigkeiten eine untere Aktivierungs-Geschwindigkeitsschwelle des ESP noch nicht erreicht ist und/oder, Initialisierungen im Stillstand noch nicht abgeschlossen werden können und/oder Bremseingriffe an der nicht angetriebenen Vorderachse als Gegenmittel gegen Übersteuern nicht greifen.

Wir die Anfahrsituation von einem Fahrer gesteuert, so kann er eine im Hinblick auf die Querdynamik beim Anfahren entstehende kritische Situation erkennen und vom Gas gehen. Gegenlenken würde hingegen nicht zum Erfolg führen, da das Fahrzeug in der Anfahrsituation sich im Wesentlichen noch im Stillstand befindet oder nur mit sehr geringer Geschwindigkeit anfährt.

Bei autonomen gesteuerten Fahrzeugen kann hingegen kein Fahrer eingreifen und auch eine HAD (Highly Aulonomous Driving)-Funktion könnte eine querdynamische Instabilität nicht kompensieren. Denn selbst wenn durch Kamera-Daten eine solche Situation erkannt werden könnte und dann durch eine geänderte Trajektorien-Vorgabe versucht werden könnte automatisch gegenzusteuern, so könnte diese geänderte Trajektorie auf Grund der sehr niedrigen Geschwindigkeit bzw. des Stillstands in der Anfahrsituation durch ein aufgebrachtes Lenkmoment nicht oder nicht vollständig eingestellt werden.

In der gattungsbildenden US 2020/122534 A1 wird ein Verfahren beschrieben, bei dem zur Optimierung einer Reifenerwärmung, um eine bessere Traktion beim Anfahren zu erzielen, während des Anfahrens die Quergeschwindigkeit und die Gierrate erfasst. Wenn die Gierrate ansteigt, dann wird die Raddrehzahl der angetriebenen Räder erhöht bzw. das Antriebsmoment erhöht.

Der Erfindung liegt die Aufgabe zugrunde, ein Verfahren und eine Vorrichtung anzugeben, dass eine Fahrinstabilität bei einer Anfahrsituation vermieden werden kann.

Diese Aufgabe wird erfindungsgemäß durch die Merkmale der Ansprüche 1 und 14 gelöst.

Offenbarung der Erfindung

Gemäß einem ersten Aspekt sieht die Erfindung ein Verfahren zur Stabilisierung eines Fahrzeugs bei einer Anfahrsituation aus dem Stillstand vor, wobei das Fahrzeug von einer Antriebsmaschine angetrieben wird, welche bei dem Anfahrvorgang an angetriebenen Rädern ein Antriebsmoment erzeugt, umfassend wenigstens die folgenden Schritte:

a) Die Anfahrsituation des Fahrzeugs wird detektiert und bei der detektierten Anfahrsituation werden
b) das Fahrzeug-Ist-Verhalten in Bezug auf die Querdynamik des Fahrzeugs bestimmt, und
c) eine Abweichung des Fahrzeug-Ist-Verhaltens von einem Fahrzeug-Soll-Verhalten in Bezug auf die Querdynamik des Fahrzeugs ermittelt, und
d) eine Anpassung des Antriebsmoments in Abhängigkeit von der Abweichung vorgenommen.

Die Erfindung hat erkannt, dass in einer Anfahrsituation mit querdynamischer Instabilität ein Bedarf für eine größere Seitenführungskraft an den angetriebenen Rädern des Fahrzeugs besteht. Dies wird durch die Anpassung und insbesondere durch eine Reduktion des Antriebsmoments in Abhängigkeit von der Abweichung zwischen dem Fahrzeug-Ist-Verhalten und dem Fahrzeug-Soll-Verhalten in Bezug auf das querdynamische Verhalten erzielt.

Erfindungsgemäß wird, wenn die Abweichung einen Grenzwert überschreitet, das von der Antriebsmaschine erzeugte Antriebsmoment reduziert. Dieser Grenzwert kann fest vorgegeben oder abhängig von einer unteren Fahrzeuggrenzgeschwindigkeit sein, ab welcher eine Erfassung von Raddrehzahlen möglich ist.

Bevorzugt wird bei dem Verfahren das von der Antriebsmaschine erzeugte Antriebsmoment abhängig von der Abweichung reduziert. Reduzieren des Antriebsmoments bedeutet, dass gegenüber einem vom Fahrer oder autonom angeforderten Antriebsmoment ein demgegenüber geringeres oder reduziertes Antriebsmoment angefordert wird. Auch kann das von der Antriebsmaschine während des Anfahrvorgangs erzeugte Antriebsmoment umso mehr reduziert werden, desto größer die Abweichung ist.

Das Verfahren wird bevorzugt in Form einer (zusätzlichen) Anfahrstabilitätsfunktion ausgeführt bzw. ist als (zusätzliche) Anfahrstabilitätsfunktion in einer elektronischen Steuerung implementiert. Diese Anfahrstabilitätsfunktion ist bevorzugt außerhalb oder zusätzlich in Bezug zu einer üblichen Fahrstabilitätsregelung wie ESP und/oder außerhalb oder zusätzlich in Bezug zu einer üblichen Antriebsschlupfregelung (ASR) vorgesehen.

Durch die in den Unteransprüchen aufgeführten Maßnahmen sind vorteilhafte Weiterbildungen und Verbesserungen der in Anspruch 1 angegebenen Erfindung möglich.

Bevorzugt repräsentiert eine erfasste Fahrzeug-Ist-Drehrate des Fahrzeugs das Fahrzeug-Ist-Verhalten und eine Fahrzeug-Soll-Drehrate des Fahrzeugs das Fahrzeug-Soll-Verhalten. Die Abweichung wird dann beispielsweise durch eine Differenz zwischen der Fahrzeug-Soll-Drehrate und der Fahrzeug-Ist-Drehrate gebildet. Bevorzugt wird der Betrag dieser Differenz ermittelt.

Die Fahrzeug-Soll-Drehrate wird bevorzugt mittels des Einspurmodells nach der folgenden Gleichung ermittelt:

$$\dot{\psi} = \frac{\delta * v}{l_{wh} + EG * v^2}$$

mit:

$\dot{\psi}$ = *Solldrehrate*

$\delta$ = *Radlenkwinkel*

V = Fahrzeuggeschwindigkeit

EG = Eigenlenkgradient

$l_{wh}$ = Radstand

Bevorzugt wird die Fahrzeuggeschwindigkeit (v) durch Auswertung der Drehzahl wenigstens eines nicht angetriebenen Rads detektiert.

Alternativ kann als Fahrzeug-Soll-Drehrate ein vorbestimmter Wert herangezogen werden.

Bei dem Verfahren kann auch zusätzlich oder alternativ eine erfasste Ist-Querbeschleunigung des Fahrzeugs das Fahrzeug-Ist-Verhalten und eine insbesondere vorgegebene oder ermittelte Fahrzeug-Soll-Querbeschleunigung das Fahrzeug-Soll-Verhalten repräsentieren. Die Abweichung wird dann beispielsweise durch eine Differenz zwischen der Fahrzeug-Soll-Querbeschleunigung und der Fahrzeug-Ist-Querbeschleunigung gebildet. Bevorzugt der Betrag dieser Differenz ermittelt.

Auch kann bei dem Verfahren die Anfahrsituation des Fahrzeugs durch Auswertung der Drehzahl wenigstens eines nicht angetriebenen Rads detektiert werden.

Vorzugsweise wird bei dem Verfahren die Anfahrsituation des Fahrzeugs dadurch detektiert, dass festgestellt wird, dass sich eine mittels wenigstens eines Sensors erfasste Fahrzeug-Geschwindigkeit ausgehend von Null bis zu einer (unteren) Fahrzeug-Grenzgeschwindigkeit steigert.

Gemäß einer ersten Ausführung kann bei dem Verfahren zumindest bei der Anfahrsituation der Antriebsschlupf bestimmt und dann die Anpassung und insbesondere die Reduktion des Antriebsmoments dadurch erfolgen, dass für die angetriebenen Räder ein maximal zulässiger Antriebsschlupf festgelegt wird, der kleiner ist als ein von einer Antriebsschlupfregelung (ASR) vorgegebener Soll-Antriebsschlupf. Gemäß einer zu bevorzugenden zweiten Ausführung kann die Anpassung und insbesondere die Reduktion des Antriebsmoments dadurch erfolgen, dass die Antriebsmaschine (direkt) angesteuert wird, das Antriebsmoment anzupassen und insbesondere zu reduzieren.

Auch kann bei dem Verfahren die Anfahrsituation durch einen Fahrer des Fahrzeugs oder autonom, insbesondere von einem Autopiloten ausgelöst werden.

Gemäß einem zweiten Aspekt schlägt die Erfindung eine Vorrichtung zur Ausführung des oben beschriebenen Verfahrens vor, wenigstens umfassend:

a) Erste Mittel, welche eingerichtet und ausgebildet sind zum Detektieren der Anfahrsituation des Fahrzeugs,

b) Zweite Mittel, welche eingerichtet und ausgebildet sind zum Bestimmen des Fahrzeug-Ist-Verhaltens und des Fahrzeug-Soll-Verhaltens in Bezug auf die Querdynamik des Fahrzeugs,

c) Dritte Mittel, welche eingerichtet und ausgebildet sind zum Anpassen des Antriebsmoments in Abhängigkeit von der Abweichung.

Bevorzugt können bei der Vorrichtung

a) die ersten Mittel wenigstens einen Raddrehzahlsensor an einem nicht angetriebenen Rad zur Erzeugung eines Raddrehzahlsignals und mit diesem signalverbunden eine elektronische Steuerung zur Auswertung des Raddrehzahlsignals umfassen, und

b) die zweiten Mittel wenigstens einen Drehraten-Sensor zur Erzeugung eines Drehraten-Signals und/oder wenigstens einen Querbeschleunigungssensor zur Erzeugung eines Querbeschleunigungs-Signals und signalverbunden mit diesem die elektronische Steuerung zur Auswertung des Drehraten-Signals und/oder des Querbeschleunigungs-Signals umfassen, und

c) die dritten Mittel die elektronische Steuerung umfassen, sowie

c1) eine mit der elektronischen Steuerung signalverbundene Antriebssteuerelektronik, welche ein von der elektronischen Steuerung in Abhängigkeit von der Abweichung erzeugtes Antriebssteuersignal empfängt und umsetzt, oder

c2) eine mit der elektronischen Steuerung signalverbundene Antriebsschlupfregelung (ASR), welche ein von der elektronischen Steuerung in Abhängigkeit von der Abweichung erzeugtes, einen maximal zulässigen Antriebsschlupf repräsentierendes Schlupfvorgabesignal empfängt und umsetzt.

Besonders bevorzugt ist elektronischen Steuerung in ein elektronisches Bremssteuergerät einer Bremsanlage des Fahrzeugs integriert. Die Bremsanlage kann insbesondere eine elektro-pneumatische Bremsanlage, insbesondere ein elektronisch geregeltes Bremssystem (EBS) sein. Generell kann die Bremsanlage aber eine pneumatische, elektro-pneumatische, hydraulische, elektro-hydraulische oder elektrische Bremsanlage sein.

Vorteilhafte Weiterbildungen der Erfindung ergeben sich aus den Patentansprüchen, der Beschreibung und den Zeichnungen.

Zeichnung

In der Zeichnung zeigt

Fig. 1 einen schematischen Schaltplan einer bevorzugten Ausführungsform einer bevorzugten Ausführungsform einer Vorrichtung zur Stabilisierung eines Fahrzeugs bei einer Anfahrsituation aus dem Stillstand als Teil einer elektro-pneumatischen Bremsanlage eines Zugfahrzeugs einer Zugfahrzeug-Anhängerkombination;

Fig. 2 einen Ablaufplan einer bevorzugten Ausführungsform des erfindungsgemäßen Verfahrens zur Stabilisierung eines Fahrzeugs bei einer Anfahrsituation aus dem Stillstand.

Beschreibung des Ausführungsbeispiels

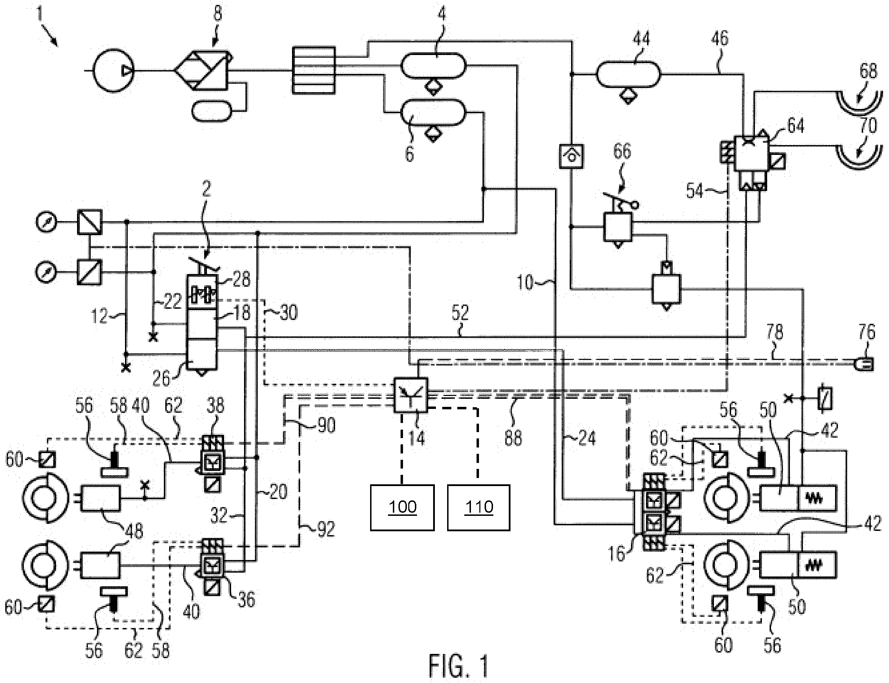

In **Fig. 1** ist schematisch eine bevorzugte Ausführungsform einer Betriebsbremsanlage 1 eines Zugsfahrzeugs einer Zugfahrzeug-Anhängerkombination gezeigt. Im vorliegenden Fall weist die Zugfahrzeug-Anhängerkombination lediglich einen 2-achsigen Sattelanhänger auf, es können jedoch auch ein Deichselanhänger oder mehrere Deichselanhänger am Zugfahrzeug angehängt sein.

Dabei wird die Betriebsbremsanlage 1 des Zugfahrzeugs beispielsweise durch eine elektro-pneumatische Reibungsbremsanlage in Form eines elektronisch geregelten Bremssystems (EBS; Electronic Brake System) gebildet.

Bei einem solchen elektronisch geregelten Bremssystems (EBS) sind achsweise oder radweise Druckregelmodule 16, 36, 38 vorhanden, mit integrierten Einlassventilen, Auslassventilen und Backup-Ventilen sowie mit Drucksensoren zur Erfassung des Ist-Bremsdrucks und mit einer übergeordneten Steuerelektronik zum Abgleich der Ist-Bremsdrücke mit den Soll-Bremsdrücken gemäß der jeweiligen Bremsanforderung. Das elektronisch geregelte Bremssystem (EBS) des Zugfahrzeugs beinhaltet weiterhin eine Bremsschlupfregelung (ABS), deren ABS-Steuerroutinen bevorzugt in ein zentrales Bremssteuergerät 14 integriert sind. Weiterhin sind hier in dem zentralen Bremssteuergerät 14 des Zugfahrzeugs vorzugsweise die Steuerroutinen einer Antriebsschlupfregelung (ASR), eines elektronischen Stabilitätsprogramms (ESP) sowie einer später noch beschriebenen Anfahrstabilitätsfunktion implementiert. Die hier nicht gezeigte Betriebsbremsanlage des Anhängers ist bevorzugt ebenfalls eine elektro-pneumatische Bremsanlage.

Gemäß des in **Fig. 1** gezeigten Schaltschemas der elektro-pneumatischen Betriebsbremsanlage 1 des Zugfahrzeugs sind ein Fußbremswertgeber 2, ein Vorderachs-Vorratsdruckbehälter 4 zur Versorgung eines Vorderachs-Druckkreises oder Vorderachs-Druckkanals sowie ein Hinterachs-Vorratsdruckbehälter 6 zur Versorgung eines Hinterachs-Druckkreises oder Hinterachs-Druckkanals vorhanden. Die Luftbeschaffung, Luftaufbereitung und die Absicherung ist wie gesetzlich vorgeschrieben ausgeführt durch ein hier nicht näher beschriebenes Luftaufbereitungsmodul 8.

Der Hinterachs-Vorratsdruckbehälter 6 ist über pneumatische Versorgungsleitungen 10, 12 einerseits mit einem Vorratsanschluss eines 2-Kanal-Druckregelmoduls 16 für die Bremszylinder 50 der Hinterachse sowie mit einem Hinterachs-Fußbremsventil 26 des Fußbremswertgebers 2 verbunden. In analoger Weise ist der Vorderachs-Vorratsdruckbehälter 4 über pneumatische Versorgungsleitungen 20, 22 mit Vorratsanschlüssen von zwei jeweils einem Bremszylinder 48 eines Vorderrads zugeordneten 1-Kanal-Druckregelmodulen 36, 38 sowie mit einem Vorderachs-Fußbremsventil 18 des Fußbremsgebers 2 verbunden.

Der Fußbremswertgeber 2 umfasst daher zwei pneumatisch wirkende Fußbremsventile 18, 26, welche abhängig von einer durch den Fuß des Fahrers auf ein Bremspedal vorgegebenen Bremsanforderung jeweils einen pneumatischen Back-up-Druck oder Steuerdruck an den Ausgängen der Fußbremsventile 18, 26 erzeugen. Parallel hierzu sind in dem Fußbremswertgeber 2 in einem elektrischen Kanal 28 zusammengefasst ein elektrischer Vorderachskanal und ein elektrischer Hinterachskanal ausgebildet, welche abhängig von der Bremsanforderung jeweils ein elektrisches Bremsanforderungssignal in eine vorzugsweise als Datenbus 30 ausgebildete elektrische Verbindung zwischen dem elektrischen Kanal 28 des Fußbremswertgebers 2 und dem zentralen elektronischen Bremssteuergerät 14 einsteuert, welches die beiden beispielsweise aus Lastgründen verschiedenen Bremsanforderungssignale für die Vorderachse und die Hinterachse unterscheiden kann.

Weiterhin sind das Vorderachs-Fußbremsventil 18 und das Hinterachs-Fußbremsventil 26 des Fußbremswertgebers 2 jeweils über eine pneumatische Steuerleitung 24, 32 mit zugeordneten Back-up-Anschlüssen des 2-Kanal-Druckregelmoduls 16 bzw. der 1-Kanal-Druckregelmodule 36, 38 verbunden. Weiterhin führt jeweils eine pneumatische Bremsleitung 40, 42 von Arbeitsdruckanschlüssen des 2-Kanal-Druckregelmoduls 16 bzw. der beiden 1-Kanal-Druckregelmodule 36, 38 zu den radweisen Bremszylindern 48, 50 der Vorderachse bzw. der Hinterachse.

Drehzahlsensoren 56 melden die aktuelle Drehzahl der hier beispielsweise angetriebenen Hinterräder und der hier beispielsweise nicht angetriebenen Vorderräder des Zweiachsfahrzeugs über elektrische Signalleitungen 58 an das zentrale Bremssteuergerät 14. Ebenso sind bevorzugt Verschleißsensoren 60 je Radbremse vorgesehen, welche abhängig vom aktuellen Bremsenverschleiß Signale über elektrische Signalleitungen 62 in das zentrale Bremssteuergerät 14 melden.

Weiterhin ist ein Anhängersteuermodul 64 vorgesehen, welches einerseits mit einem zugfahrzeugseitigen Anhänger-Vorratsdruckbehälter 44 über eine Versorgungsleitung 46 mit Druckluft versorgt wird und andererseits vom pneumatischen Steuerdruck beispielsweise des Vorderachs-Fußbremsventils 18 des Fußbremswertgebers 2 über eine Steuerleitung 52 pneumatisch durch Backup-Druck gesteuert wird. Weiterhin erhält das Anhängersteuermodul 64 auch ein elektrisches Signal vom zentralen Bremssteuergerät 14 über eine elektrische Steuerleitung 54. Schließlich wird das Anhängersteuermodul 64 noch von einer hier nicht interessierenden Feststellbremseinheit 66 angesteuert.

Das Anhängersteuermodul 64 enthält typischerweise ein Einlassmagnetventil und ein Auslassmagnetventil sowie ein Backup-Magnetventil zur Drucksteuerung eines ebenfalls integrierten und vom Anhänger-Druckluftvorrat 44 druckluftgespeisten Relaisventils, um abhängig von einem über die elektrische Steuerleitung 54 herangeführten Steuersignal über diese Magnetventile und das Relaisventil einen Steuerdruck für einen Kupplungskopf "Bremse" 70 auszusteuern. Das Relaisventil moduliert dabei aus dem an seinem Vorratsanschluss anstehenden Vorratsdruck des Anhänger-Vorratsdruckbehälters 44 abhängig von dem durch die Magnetventile gebildeten Steuerdruck den Steuerdruck für den Kupplungskopf "Bremse" 70. Mittels eines integrierten Drucksensors wird dieser Steuerdruck für den Kupplungskopf "Bremse" 70 gemessen und an das zentrale Bremssteuergerät 14 gemeldet. Fällt diese vorrangige elektrische Steuerung aus, so schaltet das integrierte Back-up-Ventil durch und das Relaisventil wird durch den in der Steuerleitung 52 geführten pneumatischen Steuerdruck des Vorderachs-Bremskreises gesteuert. Schließlich schleift das Anhängersteuermodul 64 die vom Anhänger-Druckluftvorrat 44 stammende Druckluft unter Vorratsdruck an einen Kupplungskopf "Vorrat" 68 des Zugfahrzeugs durch. Der Aufbau und die Funktionen eines solchen elektro-pneumatischen Anhängersteuermoduls 64 sind hinlänglich bekannt und brauchen deshalb hier nicht weiter erläutert zu werden.

Die Bremszuspanneinrichtungen der Hinterachse sind bevorzugt als bekannte Kombizylinder, d. h. als Kombination eines aktiven Betriebsbremszylinders 50 und eines passiven Federspeicherbremszylinders ausgebildet. "Aktiv" bedeutet in diesem Zusammenhang, dass die Betriebsbremszylinder 50 bei Belüftung zuspannen und bei Entlüftung lösen und "Passiv", dass die Federspeicherbremszylinder bei Entlüftung zuspannen und bei Belüftung lösen. An den Rädern der Vorderachse sind demgegenüber nur aktive Betriebsbremszylinder 48 vorgesehen.

Das als Baueinheit ausgeführte elektro-pneumatische 2-Kanal-Druckregelmodul 16 hat zwei getrennt regelbare Druckregelkanäle, wobei für jeden Druckregelkanal auf der Basis einer von dem Hinterachs-Druckluftvorrat 6 stammenden Vorratsluft abhängig von dem Bremsanforderungssignal des Fußbremswertgebers 2 ein geregelter, an den jeweiligen Arbeitsdruckanschlüssen anstehender Arbeitsdruck für die Bremszylinder 50 der Hinterachse erzeugt und mittels der integrierten Drucksensoren gemessen wird, um den gemessenen Ist-Bremsdruck an den Soll-Bremsdruck gemäß Bremsanforderung anzupassen bzw. einzuregeln. In analoger Weise wird in jedem 1-Kanal-Druckregelmodul 36, 38 der Vorderachse individuell für die beiden Bremszylinder 48 der Räder der Vorderachse der Bremsdruck geregelt.

Zur Ausbildung von pneumatisch kreisgetrennten Druckregelkanälen (beispielsweise hier: Vorderachs-Druckregelkanal bzw. Hinterachs-Druckregelkanal) ist jedem Druckregelkanal folglich ein eigener Druckluftvorrat 4, 6 zugeordnet, wobei die pneumatischen Strömungswege eines jeden Druckregelkanals ausgehend von dem zugeordneten Druckluftvorrat 4, 6 über die zugeordneten Druckregelmodule 16, 36, 38 bis zu den zugeordneten Bremszuspanneinrichtungen 48, 50 von dem pneumatischen Strömungsweg eines jeweils anderen Druckregelkanals pneumatisch getrennt ausgebildet sind.

Zur Ausbildung einer elektro-pneumatischen Bremsanlage mit vorrangig elektrisch betätigten Druckregelkanälen (Vorderachs-Druckregelkanal bzw. Hinterachs-Druckregelkanal) und einer nachrangigen pneumatischen Rückfallebene bei einem Ausfall der Elektrik ist jedem Druckregelmodul 16, 36, 38 besonders bevorzugt ein eigener Back-up-Kreis zugeordnet, mit eigenem Back-up-Ventil für die Einsteuerung eines von dem Vorratsdruck des dem jeweiligen Druckregelkreis der Hinterachse bzw. der Vorderachse zugeordneten Druckluftvorrat 4, 6 abgeleiteten und vom Fußbremswertgeber 2 gebildeten pneumatischen Back-up- oder Steuerdrucks, aus welchem bei einem Ausfall von elektrischen Komponenten der jeweilige Bremsdruck an den Arbeitsdruckanschlüssen der Druckregelmodule 16, 36, 38 gebildet wird.

Die Bremsanlage 1 des Zugfahrzeugs und die Bremsanlage des Anhängers sind, wie bei solchen Bremsanlagen üblich, mittels jeweils eines Kupplungskopfes "Vorrat" 68 und jeweils mittels eines Kupplungskopfes "Bremse" 70 miteinander gekoppelt.

Da das Anhängersteuermodul 64 hier beispielsweise kein eigenes elektronisches Steuergerät besitzt, müssen die elektrischen Bremssteuersignale vom zentralen Bremssteuergerät 14 über einen CAN-BUS "Anhänger" 78 und eine elektronische Anhängerschnittstelle 76 an den Anhänger übertragen werden, da dieser hier beispielsweise eine elektro-pneumatische Bremsanlage aufweist. Das Anhängersteuermodul 64 wie auch das 2-Kanal-Druckregelmodul 16 und die beiden 1-Kanal-Druckregelmodule 36, 38 werden jeweils über eine elektrische Steuerleitung 54, 88, 90, 92 von dem zentralen Bremssteuergerät 14 angesteuert.

Vor diesem Hintergrund ist die Funktionsweise der Bremsvorrichtung wie folgt: Bei einem normalen Bremsvorgang betätigt der Fahrer das Bremspedal und damit den Fußbremswertgeber 2, wodurch in dem elektrischen Kanal 28 ein elektrisches Bremsanforderungssignal analog zur gewünschten Soll-Verzögerung erzeugt und in das zentrale Bremssteuergerät 14 eingesteuert wird, welches daraufhin über die die elektrischen Steuerleitungen 54, 88, 90, 92 das Anhängersteuermodul 64, das 2-Kanal-Druckregelmodul 16 sowie die beiden 1-Kanal-Druckregelmodule entsprechend dem Bremsanforderungssignal und eventuell abhängig von weiteren Parametern wie der jeweiligen Beladung steuert. Dabei werden die jeweils integrierten Einlassmagnetventile, Auslassmagnetventile und evtl. Back-up-Magnetventile, die meist als 2/2-Wege-Magnetventile ausgebildet sind entsprechend der Bremsanforderung geschaltet, damit sie die ebenfalls integrierten Relaisventile pneumatisch steuern, um einen gemäß der Bremsanforderung entsprechenden Soll-Bremsdruck bzw. Soll-Steuerdruck in die betreffenden Bremszylinder 48, 50 des Zugfahrzeugs und anhängerseitig in das Anhängersteuerventil 80 einzusteuern, welches aus dem Soll-Steuerdruck den Bremsdruck für die Bremszylinder 84 des Anhängers moduliert. Die in den Druckregelmoduln 16, 36 und 38 und in dem Anhängersteuermodul 64 integrierten Drucksensoren melden dann den Ist-Bremsdruck bzw. Ist-Steuerdruck an das zentrale Bremssteuergerät 14, welches daraufhin durch Ansteuerung der modulseitigen Magnetventile den Soll-Bremsdruck bzw. Soll-Steuerdruck einregelt.

Wenn das Bremsanforderungssignal für das zentrale Bremssteuergerät 14 anstatt vom Fußbremswertgeber 2 von einem Fahrassistenzsystem wie z.B. ESP oder ACC oder von einem Autopiloten autonom erzeugt wird, so laufen die gleichen Funktionen wie oben beschrieben ab.

Falls der Bremsschlupf eines Rades oder mehrerer Räder des Zugfahrzeugs eine vorgegebene Bremsschlupfgrenze von beispielsweise 12% bis 14% überschreitet, was über die Raddrehzahlsensoren 56 festgestellt werden kann, so spricht die Bremsschlupfregelung bzw. das ABS des Zugfahrzeugs an. Dabei wird über eine entsprechende Ansteuerung der Magnetventile in dem dem jeweils bremsschlupfenden Rad zugeordneten Druckregelmodul 36, 38 bzw. in dem den jeweils bremsschlupfenden Rädern zugeordneten Druckregelmodul 16 durch die in dem zentralen Bremssteuergerät 14 implementierten ABS-Routinen die Bremsdrücke für das Zugfahrzeug so eingestellt, dass die Bremsschlupf-Regeldifferenz ausgeregelt wird.

In dem zentralen Bremssteuergerät 14 sind Kompatibilitätsbänder gespeichert, welche das Verhältnis zwischen der jeweils gewünschten Abbremsung z der Zugfahrzeug-Anhängerkombination und der daraus resultierenden Bremskraft des Anhängers bzw. und dem Druck am Kupplungskopf "Bremse" des Zugfahrzeugs festlegen. Der sich aus dem Kompatibilitätsband ergebende Bremsdruck für die Bremsanlage des Anhängers kann dann optional noch durch eine Koppelkraftregelung modifiziert werden. Dann wird das Anhängersteuermodul 64 von dem zentralen Bremssteuergerät 14 angesteuert, um den pneumatischen Steuerdruck im Kupplungskopf "Bremse" für den Anhänger entsprechend dieser Vorgaben einzustellen. Somit würde der Bremsdruck im Anhänger abhängig von dem durch die Bremsschlupfregelung beeinflussten Bremsdruck im Zugfahrzeug gebildet.

Eine Vorrichtung zur Stabilisierung des Zugfahrzeugs bei einer Anfahrsituation aus dem Stillstand ist hier beispielsweise in die Betriebsbremsanlage 1 integriert. Die oben bereits erwähnte Anfahrstabilitätsfunktion ist als Programm oder Programmteil in dem zentralen Bremssteuergerät 14 implementiert. Die Vorrichtung umfasst auch die Drehzahlsensoren 56 an den angetriebenen Hinterrädern und den nicht angetriebenen Vorderrädern bzw. wertet deren Drehzahlsignale insbesondere bei einer Anfahrsituation oder im Laufe einer Anfahrsituation aus. Die Vorrichtung umfasst auch ein Sensormodul 100, in welchem hier beispielsweise ein Drehratensensor und ein Querbeschleunigungssensor integriert sind. Das Sensormodul 100 ist mit dem zentralen Bremssteuergerät 14 signalverbunden, um einerseits - wie oben ausgeführt - die ESP-Funktionen ausführen zu können. Andererseits aber auch, um Drehraten-Signale und Querbeschleunigungssignale für die dem zentralen in dem zentralen Bremssteuergerät 14 hier beispielsweise implementierte Anfahrstabilitätsfunktion zu liefern. Weiterhin ist das zentrale Bremssteuergerät 14 mit einem elektronischen Antriebssteuergerät 110 beispielsweise durch einen Datenbus signalverbunden. Das elektronische Antriebssteuergerät 110 steuert eine Antriebsmaschine des Zugfahrzeugs, beispielsweise ein Brennkraftmaschine und/oder eine elektrische Maschine in Bezug auf Drehzahl, Antriebsmoment und/oder Antriebsleistung. Die Antriebsmaschine treibt hier beispielsweise die Hinterräder an, nicht aber die Vorderräder des Zugfahrzeugs.

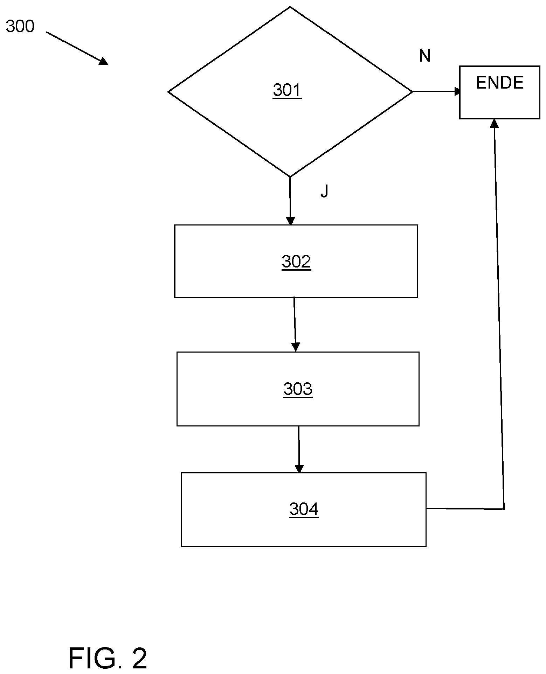

Die Funktionsweise der Anfahrstabilitätsfunktion ist als Ablaufplan eines Verfahrens 300 zur Stabilisierung des Zugfahrzeugs bei einer Anfahrsituation aus dem Stillstand in **Fig. 2** dargestellt. Die Anfahrsituation kann durch einen Fahrer des Zugfahrzeugs oder autonom, insbesondere von einem Autopiloten ausgelöst werden.

In einem Schritt 301 wird geprüft, ob eine Anfahrsituation des Zugfahrzeugs vorliegt, bevorzugt durch Auswertung der Drehzahlsignale der Drehzahlsensoren 56 an den nicht angetriebenen Vorderrädern. Anhand dieser Drehzahlsignale können der Stillstand und die Fahrzeuggeschwindigkeit v des Zugfahrzeugs detektiert werden. Die Anfahrsituation sei hier beispielsweise gegeben, wenn eine Fahrgeschwindigkeit v zwischen Null und einer unteren Fahrzeug-Grenzgeschwindigkeit, beispielsweise zwischen 3-5 km/h detektiert wird ("J" für "Ja"). Falls keine Anfahrsituation ("N" für "Nein") detektiert wird, wird das Verfahren abgebrochen ("ENDE").

Bei einer detektierten Anfahrsituation wird dann in einem nachfolgenden Schritt 302 das Fahrzeug-Ist-Verhalten in Bezug auf die Querdynamik des Zugfahrzeugs bestimmt. Hierzu werden beispielsweise die von dem Sensormodul 100 empfangenen Ist-Drehraten-Signale in dem zentralen Bremssteuergerät 14 ausgewertet.

In einem nachfolgenden Schritt 303 wird eine Abweichung des Fahrzeug-Ist-Verhaltens von einem Fahrzeug-Soll-Verhalten in Bezug auf die Querdynamik des Fahrzeugs ermittelt, hier beispielsweise dadurch, dass eine Abweichung der durch die Ist-Drehraten-Signale repräsentierten Ist-Drehrate von einer hier zu bestimmenden Soll-Drehrate ermittelt wird. Die Abweichung wird beispielsweise durch eine Differenz zwischen der Soll-Drehrate und der Ist-Drehrate gebildet. Bevorzugt wird der Betrag dieser Differenz ermittelt.

Die Soll-Drehrate wird bevorzugt mittels des Einspurmodells nach der folgenden Gleichung ermittelt:

$$\dot{\psi} = \frac{\delta * v}{l_{wh} + EG * v^2}$$

mit:

$\dot{\psi}$ = *Solldrehrate*

$\delta$ = *Radlenkwinkel*

V = Fahrzeuggeschwindigkeit

EG = Eigenlenkgradient

$l_{wh}$ = Radstand

Bevorzugt wird die Fahrzeuggeschwindigkeit (v) durch Auswertung der Drehzahl der nicht angetriebenen Vorderräder detektiert. Alternativ kann als Soll-Drehrate auch ein vorbestimmter Wert herangezogen werden.

Zusätzlich oder alternativ kann die von dem Querbeschleunigungssensor in dem Sensormodul 100 erfasste Ist-Querbeschleunigung in dem zentralen Bremssteuergerät 14 ausgewertet und mit einer Soll-Querbeschleunigung verglichen werden. Die Abweichung wird dann beispielsweise durch eine Differenz zwischen der Soll-Querbeschleunigung und der Ist-Querbeschleunigung gebildet. Bevorzugt der Betrag dieser Differenz ermittelt.

In einem nachfolgenden Schritt 304 wird eine Anpassung des Antriebsmoments in Abhängigkeit von der Abweichung vorgenommen, dadurch, dass das zentrale Bremssteuergerät 14 das Antriebssteuergerät beispielsweise direkt ansteuert, um das Antriebsmoment der Antriebsmaschine anzupassen und insbesondere zu reduzieren. Beispielsweise kann das von der Antriebsmaschine während der Anfahrsituation erzeugte Antriebsmoment umso mehr reduziert werden, desto größer die Abweichung ist. Auch kann beispielsweise erst dann, wenn die Abweichung einen Grenzwert überschritten hat, das von der Antriebsmaschine im Laufe der Anfahrsituation erzeugte Antriebsmoment reduziert werden. Die Reduzierung des Antriebsmoments erhöht die querdynamische Stabilität in der Anfahrsituation, weil dann eine größere Seitenführungskraft an den angetriebenen Rädern des Zugfahrzeugs zur Verfügung steht.

Bezugszeichenliste

| | |
|---|---|
| 1 | Betriebsbremsanlage Zugfahrzeug |
| 2 | Fußbremswertgeber |
| 4 | VA-Vorratsdruckbehälter |
| 6 | HA-Vorratsdruckbehälter |
| 8 | Luftaufbereitungsmodul |
| 10 | Versorgungsleitung |
| 12 | Versorgungsleitung |
| 14 | Bremssteuergerät |
| 16 | 2-Kanal-Druckregelmodul |
| 18 | VA-Fußbremsventil |
| 20 | Versorgungsleitung |
| 22 | Versorgungsleitung |
| 24 | Steuerleitung |
| 26 | HA-Fußbremsventil |
| 28 | elektrischer Kanal |
| 30 | Datenbus |
| 32 | Steuerleitung |
| 36 | 1-Kanal-Druckregelmodul |
| 38 | 1-Kanal-Druckregelmodul |
| 40 | Bremsleitung |

| | |
|---|---|
| 42 | Bremsleitung |
| 44 | zugfahrzeugseitiger Anhänger-Vorratsdruckbehälter |
| 46 | Versorgungsleitung |
| 48 | Bremszuspanneinrichtung VA |
| 50 | Bremszuspanneinrichtung HA |
| 52 | Steuerleitung |
| 54 | elektrische Steuerleitung |
| 56 | Drehzahlsensoren |
| 58 | elektrische Signalleitungen |
| 60 | Verschleißsensoren |
| 62 | elektrische Signalleitungen |
| 64 | Anhängersteuermodul |
| 66 | Feststell-Bremseinheit |
| 68 | Kupplungskopf "Vorrat" |
| 70 | Kupplungskopf "Bremse" |
| 76 | Anhängerschnittstelle |
| 78 | Anhänger-Datenbus |
| 88 | elektrische Steuerleitung |
| 90 | elektrische Steuerleitung |
| 92 | elektrische Steuerleitung |
| 100 | Sensormodul |
| 110 | Antriebssteuerelektronik |

**Patentansprüche**

1. Verfahren (300) zur Stabilisierung eines Fahrzeugs bei einer Anfahrsituation aus dem Stillstand, wobei das Fahrzeug von einer Antriebsmaschine angetrieben wird, welche bei dem Anfahrvorgang an angetriebenen Rädern ein Antriebsmoment erzeugt, umfassend wenigstens die folgenden Schritte:

   a) Die Anfahrsituation des Fahrzeugs wird detektiert (301) und bei der detektierten Anfahrsituation werden,
   b) das Fahrzeug-Ist-Verhalten in Bezug auf die Querdynamik des Fahrzeugs bestimmt (302), und
   c) eine Abweichung des Fahrzeug-Ist-Verhaltens von einem Fahrzeug-Soll-Verhalten in Bezug auf die Querdynamik des Fahrzeugs ermittelt (303), und
   d) eine Anpassung des Antriebsmoments in Abhängigkeit von der Abweichung vorgenommen (304) **dadurch gekennzeichnet, dass**
   e) wenn die Abweichung einen Grenzwert überschreitet, das von der Antriebsmaschine erzeugte Antriebsmoment reduziert wird.

2. Verfahren nach Anspruch 1, **dadurch gekennzeichnet, dass** eine erfasste Fahrzeug-Ist-Drehrate des Fahrzeugs das Fahrzeug-Ist-Verhalten und eine Fahrzeug-Soll-Drehrate des Fahrzeugs das Fahrzeug-Soll-Verhalten repräsentiert.

3. Verfahren nach Anspruch 2, **dadurch gekennzeichnet, dass** die Fahrzeug-Soll-Drehrate mittels des Einspurmodells nach der folgenden Gleichung ermittelt wird:

$$\dot{\psi} = \frac{\delta * v}{l_{wh} + EG * v^2}$$

mit:

$\dot{\psi}$ = Solldrehrate
$\delta$ = Radlenkwinkel
V = Fahrzeuggeschwindigkeit
EG = Eigenlenkgradient
$l_{wh}$ = Radstand

4. Verfahren nach Anspruch 3, **dadurch gekennzeichnet, dass** die Fahrzeuggeschwindigkeit (v) durch Auswertung der Drehzahl wenigstens eines nicht angetriebenen Rads detektiert wird.

5. Verfahren nach Anspruch 2, **dadurch gekennzeichnet, dass** als Fahrzeug-Soll-Drehrate ein vorbestimmter Wert herangezogen wird.

6. Verfahren nach einem der vorhergehenden Ansprüche, **dadurch gekennzeichnet, dass** eine erfasste Ist-Querbeschleunigung des Fahrzeugs das Fahrzeug-Ist-Verhalten und eine Fahrzeug-Soll-Querbeschleunigung das Fahrzeug-Soll-Verhalten repräsentiert.

7. Verfahren nach einem der vorhergehenden Ansprüche, **dadurch gekennzeichnet, dass** die Anfahrsituation des Fahrzeugs durch Auswertung der Drehzahl wenigstens eines nicht angetriebenen Rads detektiert wird.

8. Verfahren nach einem der vorhergehenden Ansprüche, **dadurch gekennzeichnet, dass** die Anfahrsituation des Fahrzeugs dadurch detektiert wird, dass festgestellt wird, dass sich eine mittels wenigstens eines Sensors erfasste Fahrzeug-Geschwindigkeit ausgehend von Null bis zu einer Fahrzeug-Grenzgeschwindigkeit steigert.

9. Verfahren nach einem der vorhergehenden Ansprüche, **dadurch gekennzeichnet, dass** der Grenzwert

   a) fest vorgegeben ist, oder
   b) abhängig von einer unteren Fahrzeuggrenzgeschwindigkeit ist, ab welcher eine Erfassung von Raddrehzahlen möglich ist.

10. Verfahren nach einem der vorhergehenden Ansprüche, **dadurch gekennzeichnet, dass** das von der Antriebsmaschine während des Anfahrvorgangs erzeugte Antriebsmoment umso mehr reduziert wird, desto größer die Abweichung ist.

**11.** Verfahren nach einem der vorhergehenden Ansprüche, **dadurch gekennzeichnet, dass** zumindest bei der Anfahrsituation der Antriebsschlupf bestimmt und die Absenkung des Antriebsmoments derart erfolgt, dass für die angetriebenen Räder ein maximal zulässiger Antriebsschlupf festgelegt wird, der kleiner ist als ein von einer Antriebsschlupfregelung (ASR) vorgegebener Soll-Antriebsschlupf.

**12.** Verfahren nach einem der vorhergehenden Ansprüche, **dadurch gekennzeichnet, dass** die Anpassung des Antriebsmoments dadurch erfolgt, dass die Antriebsmaschine angesteuert wird, das Antriebsmoment anzupassen.

**13.** Verfahren nach einem der vorhergehenden Ansprüche, **dadurch gekennzeichnet, dass** die Anfahrsituation von einem Fahrer des Fahrzeugs oder autonom gesteuert oder ausgelöst wird.

**14.** Vorrichtung zur Ausführung des Verfahrens nach einem der vorhergehenden Ansprüche, wenigstens umfassend:

a) Erste Mittel (56, 14), welche eingerichtet und ausgebildet sind zum Detektieren der Anfahrsituation des Fahrzeugs,
b) Zweite Mittel (14, 100), welche eingerichtet und ausgebildet sind zum Bestimmen des Fahrzeug-Ist-Verhaltens in Bezug auf die Querdynamik des Fahrzeugs,
c) Dritte Mittel (14, 110), welche eingerichtet und ausgebildet sind zum Anpassen des Antriebsmoments in Abhängigkeit von der Abweichung.

**15.** Vorrichtung nach Anspruch 14, **dadurch gekennzeichnet, dass**

a) die ersten Mittel wenigstens einen Raddrehzahlsensor (56) an einem nicht angetriebenen Rad zur Erzeugung eines Raddrehzahlsignals und mit diesem signalverbunden eine elektronische Steuerung (14) zur Auswertung des Raddrehzahlsignals umfassen, und dass
b) die zweiten Mittel wenigstens einen Drehraten-Sensor (100) zur Erzeugung eines Drehraten-Signals und/oder wenigstens einen Querbeschleunigungssensor zur Erzeugung eines Querbeschleunigungs-Signals und signalverbunden mit diesem die elektronische Steuerung (14) zur Auswertung des Drehraten-Signals und/oder des Querbeschleunigungs-Signals umfassen, und dass
c) die dritten Mittel die elektronische Steuerung (14) umfassen, sowie

c1) eine mit der elektronischen Steuerung (14) signalverbundene Antriebssteuerelektronik (110), welche ein von der elektronischen Steuerung (14) in Abhängigkeit von der Abweichung erzeugtes Antriebssteuersignal empfängt und umsetzt, oder
c2) eine mit der elektronischen Steuerung (14) signalverbundene Antriebsschlupfregelung (ASR), welche ein von der elektronischen Steuerung (14) in Abhängigkeit von der Abweichung erzeugtes, einen maximal zulässigen Antriebsschlupf repräsentierendes Schlupfvorgabesignal empfängt und umsetzt.

## Claims

**1.** A method (300) for stabilizing a vehicle in a start-up situation from a standstill, wherein the vehicle is driven by a driving machine which generates a driving torque on driven wheels during the start-up process, comprising at least the following steps:

a) the start-up situation of the vehicle is detected (301) and in the case of the detected start-up situation,
b) the actual behavior of the vehicle in relation to the lateral dynamics of the vehicle is determined (302), and
c) a deviation of the actual behavior of the vehicle from a target behavior of the vehicle with regard to the lateral dynamics of the vehicle is determined (303), and
d) an adjustment of the drive torque is carried out (304) depending on the deviation, **characterized in that**
e) if the deviation exceeds a limit value, the drive torque generated by the driving machine is reduced.

**2.** The method as claimed in claim 1, **characterized in that** a recorded actual vehicle rotation rate of the vehicle represents the actual behavior of the vehicle and a target vehicle rotation rate of the vehicle represents the target behavior of the vehicle.

**3.** The method as claimed in claim 2, **characterized in that** the target rotation rate of the vehicle is determined by means of the single-track model according to the following equation:

$$\psi = \frac{\delta * v}{l_{wh} + EG * v^2}$$

with:

$\psi$ = target rotation rate
$\delta$ = wheel steering angle
$V$ = vehicle speed
EG = self - steering gradient
$l_{wh}$ = wheelbase

4. The method as claimed in claim 3, **characterized in that** the vehicle speed (v) is detected by evaluation of the rotation rate of at least one non-driven wheel.

5. The method as claimed in claim 2, **characterized in that** a predetermined value is used as the target rotation rate of the vehicle.

6. The method as claimed in any one of the preceding claims, **characterized in that** a recorded actual lateral acceleration of the vehicle represents the actual behavior of the vehicle and a target lateral acceleration of the vehicle represents the target behavior of the vehicle.

7. The method as claimed in any one of the preceding claims, **characterized in that** the start-up situation of the vehicle is detected by evaluating the rotation rate of at least one non-driven wheel.

8. The method as claimed in any one of the preceding claims, **characterized in that** the start-up situation of the vehicle is detected by determining that a vehicle speed recorded by at least one sensor increases from zero to a vehicle limit speed.

9. The method as claimed in any one of the preceding claims, **characterized in that** the limit value

   a) is fixed, or
   b) depends on a lower vehicle limit speed from which wheel rotation rates can be recorded.

10. The method as claimed in any one of the preceding claims, **characterized in that,** the more the drive torque generated by the driving machine during the start-up process is reduced, the greater the deviation.

11. The method as claimed in any one of the preceding claims, **characterized in that** at least in the start-up situation the drive slip is determined and the reduction of the drive torque takes place in such a way that a maximum permissible drive slip is specified for the driven wheels which is less than a target drive slip specified by a traction control system (ASR).

12. The method as claimed in any one of the preceding claims, **characterized in that** the adjustment of the drive torque takes place by controlling the driving machine to adjust the drive torque.

13. The method as claimed in any one of the preceding claims, **characterized in that** the start-up situation is controlled or triggered by a driver of the vehicle or autonomously.

14. A device for carrying out the method as claimed in any one of the preceding claims, at least comprising:

   a) first means (56, 14), which are set up and designed for detecting the start-up situation of the vehicle,
   b) second means (14, 100), which are set up and designed for determining the actual behavior of the vehicle with regard to the lateral dynamics of the vehicle,
   c) third means (14, 110), which are set up and designed for adjusting the driving torque as a function of the deviation.

15. The device as claimed in claim 14, **characterized in that**

   a) the first means comprise at least one wheel rotation rate sensor (56) on a non-driven wheel for generating a wheel rotation rate signal and an electronic controller (14) with a signal transfer connection to said sensor for evaluating the wheel rotation rate signal, and **in that**
   b) the second means comprise at least one rotation rate sensor (100) for generating a rotation rate signal and/or at least one lateral acceleration sensor for generating a lateral acceleration signal and the electronic controller (14) with a signal transfer connection to said sensor for evaluating the rotation rate signal and/or the lateral acceleration signal, and **in that**
   c) the third means comprise the electronic controller (14), and

      c1) a drive control electronic system (110) with a signal transfer connection to the electronic control system (14), which receives and implements a drive control signal generated by the electronic control system (14) depending on the deviation, or
      c2) a traction control system (ASR) with a signal transfer connection to the electronic control system (14), which receives and implements a slip specification signal representing a maximum permissible drive slip generated by the electronic control system (14) depending on the deviation.

**Revendications**

1. Procédé (300) de stabilisation d'un véhicule lors d'une situation de démarrage à l'arrêt, dans lequel le véhicule est entraîné par une machine d'entraînement, laquelle génère un couple d'entraînement au niveau de roues entraînées lors du processus de démarrage, comprenant au moins les étapes suivantes :

   a) la situation de démarrage du véhicule est détectée (301) et, lors de la situation de démarrage détectée,
   b) le comportement réel du véhicule est déterminé (302) en termes de dynamique transversale du véhicule, et
   c) un écart entre le comportement réel du véhicule et un comportement de consigne du véhicule est déterminé (303) en termes de dynamique transversale du véhicule, et
   d) une adaptation du couple d'entraînement est réalisée (304) en fonction de l'écart, **caractérisé en ce que**
   e) lorsque l'écart dépasse une valeur limite, le couple d'entraînement généré par la machine d'entraînement est réduit.

2. Procédé selon la revendication 1, **caractérisé en ce qu'**un taux de rotation réel du véhicule détecté représente le comportement réel du véhicule et un taux de rotation de consigne du véhicule représente le comportement de consigne du véhicule.

3. Procédé selon la revendication 2, **caractérisé en ce que** le taux de rotation de consigne du véhicule est déterminé au moyen du modèle de suivi de voie selon l'équation suivante :

$$\dot{\psi} = \frac{\delta * v}{l_{wh} + EG * v^2}$$

   avec :

   $\dot{\psi}$ = *taux de rotation de consigne*
   $\delta$ = *angle de braquage de roue*
   **V = vitesse du véhicule**
   **EG = gradient de braquage propre**
   **l$_{wh}$ = empattement**

4. Procédé selon la revendication 3, **caractérisé en ce que** la vitesse du véhicule (v) est détectée par l'évaluation du taux de rotation d'au moins une roue non entraînée.

5. Procédé selon la revendication 2, **caractérisé en ce qu'**une valeur prédéterminée est utilisée en tant que taux de rotation de consigne du véhicule.

6. Procédé selon l'une quelconque des revendications précédentes, **caractérisé en ce qu'**une accélération latérale réelle détectée du véhicule représente le comportement réel du véhicule et une accélération latérale de consigne du véhicule représente le comportement de consigne du véhicule.

7. Procédé selon l'une quelconque des revendications précédentes, **caractérisé en ce que** la situation de démarrage du véhicule est détectée par l'évaluation du taux de rotation d'au moins une roue non entraînée.

8. Procédé selon l'une quelconque des revendications précédentes, **caractérisé en ce que** la situation de démarrage du véhicule est détectée **en ce qu'**il est constaté qu'une vitesse du véhicule détectée au moyen d'au moins un capteur augmente de zéro jusqu'à une vitesse limite du véhicule.

9. Procédé selon l'une quelconque des revendications précédentes, **caractérisé en ce que** la valeur limite

   a) est prédéterminée, ou
   b) dépend d'une vitesse limite du véhicule inférieure à partir de laquelle une détection des vitesses de rotation des roues est possible.

10. Procédé selon l'une quelconque des revendications précédentes, **caractérisé en ce que** le couple d'entraînement généré par la machine d'entraînement pendant le processus de démarrage est d'autant plus réduit que l'écart est important.

11. Procédé selon l'une quelconque des revendications précédentes, **caractérisé en ce que**, au moins lors de la situation de démarrage, le patinage à l'entraînement est déterminé et la réduction du couple d'entraînement s'effectue de sorte qu'un patinage à l'entraînement maximal admissible est fixé pour les roues entraînées, qui est inférieur à un patinage à l'entraînement de consigne prédéfini par une régulation du patinage à l'entraînement (ASR).

12. Procédé selon l'une quelconque des revendications précédentes, **caractérisé en ce que** l'adaptation du couple d'entraînement s'effectue en commandant le la machine d'entraînement pour adapter le couple d'entraînement.

13. Procédé selon l'une quelconque des revendications précédentes, **caractérisé en ce que** la situation de démarrage est commandée ou déclenchée par un conducteur du véhicule ou de manière autonome.

14. Dispositif destiné à mettre en œuvre le procédé selon l'une quelconque des revendications précédentes, comprenant au moins :

a) de premiers moyens (56, 14), lesquels sont configurés et conçus pour détecter la situation de démarrage du véhicule,
b) de deuxièmes moyens (14, 100), lesquels sont configurés et conçus pour déterminer le comportement réel du véhicule en termes de dynamique transversale du véhicule,
c) de troisièmes moyens (14, 110) qui sont configurés et conçus pour adapter le couple d'entraînement en fonction de l'écart.

15. Dispositif selon la revendication 14, **caractérisé en ce que**

a) les premiers moyens comprennent au moins un capteur de vitesse de roue (56) monté sur une roue non entraînée pour générer un signal de vitesse de roue, ainsi qu'une unité de commande électronique (14) liée à celui-ci pour analyser le signal de vitesse de roue, et **en ce que**
b) les deuxièmes moyens comprennent au moins un capteur de taux de rotation (100) destiné à générer un signal de taux de rotation et/ou au moins un capteur d'accélération latérale destiné à générer un signal d'accélération latérale, ainsi qu'une commande électronique (14) reliée à celui-ci pour évaluer le signal de taux de rotation et/ou le signal d'accélération latérale, et **en ce que**
c) les troisièmes moyens comprennent la commande électronique (14), ainsi que

c1) une électronique de commande d'entraînement (110) reliée par signal à la commande électronique (14), laquelle reçoit et convertit un signal de commande d'entraînement généré par la commande électronique (14) en fonction de l'écart, ou
c2) une régulation du patinage (ASR) reliée par signal à la commande électronique (14), laquelle reçoit et convertit un signal de consigne de patinage généré par la commande électronique (14) en fonction de l'écart représentant un patinage à l'entraînement maximal admissible.

FIG. 1

300

301

N

ENDE

J

302

303

304

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020122534 A1